## Europäisches Patentamt
## European Patent Office
## Office européen des brevets

(19)

(11) Veröffentlichungsnummer: **0 022 983**
**B1**

(12)

# EUROPÄISCHE PATENTSCHRIFT

(45) Veröffentlichungstag der Patentschrift:
29.12.82

(51) Int. Cl.³: **B 01 D 53/26**

(21) Anmeldenummer: **80103911.6**

(22) Anmeldetag: **09.07.80**

(54) **Verfahren zur Regenerierung des bei der Trocknung eines technischen Gases verwendeten flüssigen Absorptionsmittels.**

(30) Priorität: **18.07.79 DE 2928934**

(43) Veröffentlichungstag der Anmeldung:
**28.01.81 Patentblatt 81/4**

(45) Bekanntmachung des Hinweises auf die Patenterteilung:
**29.12.82 Patentblatt 82/52**

(84) Benannte Vertragsstaaten:
**DE GB IT NL**

(56) Entgegenhaltungen:
**DE-A-1 494 811**
**FR-A-1 077 976**
**US-A-3 609 942**
**US-A-4 010 009**

(73) Patentinhaber: **UOP Inc. G.m.b.H., D-5272 Wipperfürth, Egerpohl (DE)**

(72) Erfinder: **Funk, Werner, Zeppelinstrasse 1, D-6451 Neuberg (DE)**
Erfinder: **Offermann, Rolf, Ing. grad., Weidigstrasse 15a, D-6308 Butzbach (DE)**

(74) Vertreter: **Weber, Dieter, Dr. et al, Dr. Dieter Weber und Klaus Seiffert Patentanwälte Gustav-Freytag-Strasse 25, D-6200 Wiesbaden 1 (DE)**

Verfahren zur Regenerierung des bei der Trocknung eines technischen Gases
verwendeten flüssigen Absorptionsmittels

Die Erfindung betrifft ein Verfahren zur Regenerierung des bei der Trocknung eines technischen Gases verwendeten flüssigen Absorptionsmittels durch Destillation des Absorptionsmittels, Rückführung des von wenigstens einem Teil des Wassers befreiten Destillations-Sumpfproduktes über einen Zwischenbehälter zu der Trocknung des technischen Gases und Zuführung des von dem Absorptionsmittel abgetrennten, aus der Trocknung des technischen Gases stammenden Gases als Brennstoff zu einer Brenneinrichtung, wobei das Adsorptionsmittel zwischen der Trocknung des technischen Gases und der Destillation durch Entspannung von wenigstens einem Teil des darin gelösten Gases befreit wird.

Ein solches Verfahren ist aus der US-A-3 609 942 bekannt. Wenn aber bei dem dort beschriebenen Verfahren in dem Zwischenbehälter ein zusätzliches Strippen des Absorptionsmittels erfolgen soll, um dieses zusätzlich von Wasser zu befreien, muß entweder eine gesonderte Stripperkolonne oder ein Teil des getrockneten technischen Gases verwendet werden, so daß im letzteren Fall die Ausbeute an getrocknetem Gas abnimmt, da das Strippgas anschließend verbrannt wird.

Außerdem besteht ein wesentlicher Nachteil dieses Verfahrens darin, daß die der Brennereinrichtung zugeführten Gase zu einem großen Teil aus Wasserdampf bestehen, welcher etwa 90% des der Brennereinrichtung zugeführten Brennstoffes ausmachen kann. Im Regelfall sind Brenner, insbesondere selbstansaugende Brenner und Gebläsebrenner nicht in der Lage, solche größtenteils aus Wasserdampf bestehenden Brenngase zu verarbeiten, zumal häufig gleichzeitig noch die Zusammensetzung der darin enthaltenen brennbaren Gase stark schwankt. Außerdem birgt der hohe Wasserdampfgehalt in dem der Brennereinrichtung zugeführten Gasgemisch die Gefahr von Kondensatbildung und im Winter von Leitungsverstopfung durch Eisbildung in sich.

Ein ähnliches Verfahren ist auch aus der DE-C-1 769 990 bekannt. Dieses hat den zusätzlichen Nachteil, daß eine hohe Dampfbelastung in der Destillationskolonne auftritt, da die gesamte im Absorptionsmittel während der Gastrocknung gelösten gasförmigen Bestandteile die Destillationskolonne mit durchströmen. Aus diesem Grund ist bei diesem Verfahren eine Destillationskolonne mit großem Querschnitt erforderlich.

Die der Erfindung zugrundeliegende Aufgabe bestand nun darin, ein Verfahren der eingangs geschilderten Art zu bekommen, das die diskutierten Nachteile des Standes der Technik vermeidet und eine Verfahrensführung ergibt, die kein zusätzliches Strippgas erfordert, die Dampfbelastung der Destillationskolonne vermindert und zu einem weitgehend trockenen Heizgas führt, das in selbstansaugenden Brennern und Gebläsebrennern verbrannt werden kann. Diese Effekte sollen mit einer vereinfachten und in sich geschlossenen Verfahrensführung erreicht werden.

Das erfindungsgemäße Verfahren ist dadurch gekennzeichnet, daß man das durch Entspannung aus dem Absorptionsmittel freigesetzte Gas nach vorherigem Erwärmen als Strippgas durch den Zwischenbehälter leitet, es danach vor dem Einführen in die Brennereinrichtung im wesentlichen von wenigstens einem Teil des darin enthaltenen Wassers befreit und das abgetrennte Wasser der Destillation zuführt.

Dieses Verfahren hat den Vorteil, daß das im Absorptionsmittel, welches die Trocknung des technischen Gases verläßt, gelöste Gas, das sogenannte Lösungsgas, doppelt genutzt wird, und zwar zunächst als Strippgas zur zusätzlichen Aufkonzentrierung des Absorptionsmittels bzw. Entfernung von zusätzlichem Wasser aus diesem und sodann als Brenngas in einer Brennereinrichtung. Der weitere Vorteil des Verfahrens nach der Erfindung besteht darin, daß dieses Brenngas, wenn es der Brennereinrichtung zugeführt wird, weitgehend getrocknet und gekühlt ist, so daß übliche Brenner, wie selbstansaugende Brenner und Gebläsebrenner, dieses Brenngas auch bei stark schwankender Zusammensetzung, wie sie bei solchen Verfahren üblich ist, leicht verkraften.

Ein weiterer Vorteil des erfindungsgemäßen Verfahrens besteht darin, daß die Investitionskosten gesenkt werden, indem der Querschnitt der Destillationskolonne wegen geringerer Dampfbelastung vermindert werden kann. Schließlich besteht noch ein weiterer Vorteil darin, daß die Sicherheit der Anlage erhöht wird, indem Störungen im Brenner durch die vorherige Trocknung des Heizgases vermieden werden und die Destillation von brennbaren Gases freigehalten wird. Dies ist von besonderer Bedeutung, da nach dem Stand der Technik durch die hohe Dampfbelastung der Destillationskolonne in dieser Gasstaus auftreten konnten, die gelegentlich zu Bränden führten, da diese Gasstaus von brennbaren Gasen verursacht wurden.

Das in dem erfindungsgemäßen Verfahren verwendete flüssige Absorptionsmittel ist von bekannter chemischer Natur und besteht gewöhnlich aus Glycolen, wie Mono-, Di- oder Triäthylenglycol. Diese Absorptionsmittel haben die Eigenschaft, daß sie bei der Trocknung des technischen Gases nicht nur Wasser aus diesem absorbieren, sondern auch gasförmige Bestandteile des zu trocknenden technischen Gases lösen. Wenn das zu trocknende technische Gas beispielsweise $H_2S$, $CO_2$ oder Mercaptane enthält, werden auch diese wenigstens teilweise von dem Absorptionsmittel absorbiert.

Erfindungsgemäß wird nun das Lösungsgas und Wasser enthaltende Absorptionsmittel einer nahezu drucklos betriebenen Regenerierung zugeführt und kontinuierlich von Lösungsgas und Wasser befreit, um in dieser regenerierten Form erneut für die Trocknung des technischen Gases eingesetzt zu werden.

Das durch Entspannung freigesetzte Gas, das auch als »Entlösungsgas« bezeichnet wird, wird erfindungsgemäß nacheinander als Strippgas und Brenngas verwendet. Zwischen seiner Funktion als Strippgas und seiner Funktion als Brenngas wird es im wesentlichen von Wasser befreit. Dies kann auf unterschiedliche Weise erfolgen. Beispielsweise kann es vor dem Einführen in die Brennereinrichtung durch Kondensation des darin enthaltenen Wassers in einem Kühler von diesem Wasser befreit werden. Statt dessen kann es vor dem Einführen in die Brennereinrichtung durch Kontakt mit flüssigem Absorptionsmittel ganz oder teilweise von Wasser befreit werden. Zweckmäßig ist es, beide Trocknungsmethoden nacheinander anzuwenden und insbesondere zunächst durch Kühlung Wasser auszukondensieren und anschließend weiteres Wasser durch Kontakt mit Absorptionsmittel aus dem danach als Brenngas verwendeten Strippgas zu entfernen.

Als Absorptionsmittel wird dabei zweckmäßig jenes verwendet, das auch zur Trocknung des technischen Gases benutzt wird. Besonders zweckmäßig ist es dabei, wenn man für den Kontakt mit dem Strippgas zu dessen Trocknung einen Seitenstrom des von der Trocknung des technisches Gases kommenden Absorptionsmittels verwendet und diesen Seitenstrom nach dem Kontakt mit dem Strippgas der Destillation zuführt. Dieser Seitenstrom wird günstigerweise von dem Hauptstrom abgenommen, bevor dieser zur Abgabe von darin gelöstem Gas entspannt wird.

Erfindungsgemäß wird das bei der Entspannung freigesetzte Gas vor der Verwendung als Strippgas erwärmt, um die Strippwirkung zu erhöhen. Dieses Erwärmen kann auf unterschiedliche Weise erfolgen, etwa mit Hilfe eines zusätzlichen Erhitzers. Zweckmäßig ist es jedoch, diese Erwärmung so durchzuführen, daß man das durch Entspannung freigesetzte Gas vor der Einführung in den Zwischenbehälter durch Wärmeaustausch mit dem Sumpf der Destillationseinrichtung erwärmt.

Das durch die Trocknung je nach Bedarf mehr oder weniger stark von Wasser befreite Strippgas wird nunmehr als Brennstoff für eine Brennereinrichtung verwendet. Diese Brennereinrichtung kann von der für das erfindungsgemäße Verfahren verwendeten Apparatur getrennt und irgendeine beliebige Brennereinrichtung sein. Um einen in sich geschlossenen Verfahrensablauf zu bekommen und um einen Transport des gewonnenen Heizgases zu vermeiden, ist es jedoch zweckmäßig, das mehr oder weniger stark getrocknete Strippgas als Brennstoff für den Reboiler der Destillationseinrichtung erfindungsgemäß zu verwenden.

Der verwendete Zwischenbehälter dient einerseits als Pufferbehälter für das zur Trocknung des technischen Gases zurückgeführte Absorptionsmittel und andererseits zur weiteren Aufkonzentrierung dieses Absorptionsmittels mit Hilfe des Strippgases. Hierzu ist der Zwischenbehälter zweckmäßig über ein aufsteigendes Rohr mit dem Sumpf der Destillationseinrichtung verbunden, so daß Destillations-Sumpfprodukt über einen Überlauf im Sumpf der Destillationseinrichtung von dem Sumpf der Destillationseinrichtung in den Zwischenbehälter fließt. Im Gegenstrom zu dem in den Zwischenbehälter ablaufenden Destillations-Sumpfprodukt steigt Strippgas aus dem Zwischenbehälter durch das Steigrohr auf und wird vom oberen Ende des Steigrohres abgenommen und der Trocknung, wie einem Kühler und/oder Kontaktor, zugeführt. Damit das Strippgas nicht vom oberen Ende des Steigrohres in die Destillationskolonne gelangt, ist am oberen Ende des Steigrohres zweckmäßig ein in den Sumpf der Destillationseinrichtung eintauchendes Tauschrohr vorgesehen, über welches das aufsteigende Strippgas aus dem Sumpf der Destillationseinrichtung zu den Trocknungseinrichtungen, wie einem Kühler und/oder einem Kontaktor, gelangt.

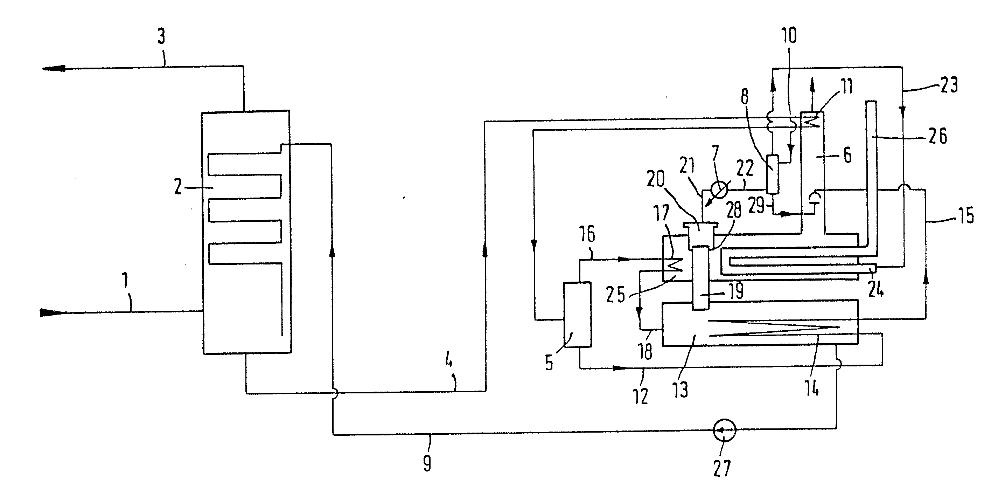

Anhand der Zeichnung wird die Erfindung weiter erläutert. Die Zeichnung zeigt in schematischer Weise ein Fließbild einer bevorzugten Ausführungsform des Verfahrens.

Bei der in der Zeichnung dargestellten Ausführungsform tritt das zu trocknende technische Gas unter Druck durch die Leitung 1 in den Gas-Glycol-Kontaktor 2 ein, wo das Gas in innigen Kontakt mit dem Absorptionsmittel Glycol tritt. Das getrocknete technische Gas verläßt den Kontaktor 2 über die Leitung 3 und wird von dort seinem Verwendungszweck zugeführt.

Das mit Wasser und gelösten Anteilen des technischen Gases angereicherte Glycol wird über die Leitung 4 vom unteren Teil des Kontaktors 2 abgezogen und tritt bei 11 in indirekten Wärmeaustausch mit dem Kopfprodukt der Destillationskolonne 6. Vor diesem Wärmeaustausch wird bei 10 ein Seitenstrom abgenommen, der in den Gas-Glycol-Kontaktor 8 eingeführt wird, was nachfolgend noch im einzelnen erläutert wird.

Die Hauptmenge des mit Wasser und gelöstem Gas angereicherten Absorptionsmittels gelangt nach dem Erwärmen durch Wärmeaustausch bei 11 in die Trennvorrichtung 5. Teilweise bereits in einer Ausschleusevorrichtung am Boden des Kontaktors 2 und teilweise in der Trennvorrichtung 5 wird das Absorptionsmittel entspannt, wobei darin gelöste gasförmige Bestandteile freigesetzt werden. In der Trennvorrichtung 5 trennt sich die aus diesen freigesetzten Gasen bestehende Gasphase von der flüssigen Phase, die aus Absorptionsmittel und Wasser besteht.

Die flüssige Phase geht von der Trennvorrichtung 5 über Leitung 12 in den Wärmeaustauscher 14, wo sie im Wärmeaustausch mit dem regenerierten Absorptionsmittel in dem Zwischenbehälter 13 erwärmt wird und sodann über Leitung 15 an einem mittleren Punkt in die Destillationskolonne 6 eintritt.

In der Destillationskolonne 6 trennt sich Wasser von dem Absorptionsmittel Glycol, wobei der Wasserdampf die Destillationskolonne über Kopf verläßt und an die Atmosphäre abgegeben wird. Das Destillations-Sumpfprodukt, das aus dem Absorptionsmittel Glycol mit stark herabgesetztem Wassergehalt besteht, gelangt von dem Sumpf 25 über den Überlauf 28 und das Fallrohr 19 in den Zwischenbehälter 13 und von dort in einer mit Hilfe der Pumpe 27 gesteuerten Menge über die Leitung 9 zurück zu dem Kontaktor 2.

Die Gasphase aus der Trennvorrichtung 5 gelangt über die Leitung 16 in den Wärmeaustauscher 17, wo sie im Wärmeaustausch mit dem Destillations-Sumpfprodukt erwärmt wird. Von dort gelangt das Gas über die Leitung 18 in den Zwischenbehälter 13, von dort im Gegenstrom zu dem Destillations-Sumpfprodukt der Destillationskolonne durch die Falleitung 19 in das Tauchrohr 20 und von dort über die Leitung 21 zunächst in den Kühler 7 und dann über die Leitung 22 in den Gas-Glycol-Kontaktor 8.

Beim Durchgang durch den Zwischenbehälter 13 und das Fallrohr 19 wirkt das vorher bei 17 erwärmte Gas als Strippgas, dessen Strippwirkung durch das vorherige Erwärmen erhöht wird. Das Tauchrohr 20 verhindert, daß das Strippgas am oberen Ende des Fallrohres 19 in den Sumpf 25 der Destillationskolonne 6 eintritt, sondern statt dessen zu dem Kühler 7 gelangt. Dort kondensiert ein Teil des Wassers aus dem Strippgas.

In dem Kontaktor 8 tritt das teilweise getrocknete Strippgas mit dem flüssigen Seitenstrom 10 aus Leitung 4 in Kontakt, wobei eine weitere Trocknung des Strippgases erfolgt. Die wasserhaltige flüssige Absorptionsmittelphase aus dem Kontaktor 8 geht über die Leitung 29 in die Destillationskolonne 6. Das getrocknete Strippgas geht über Kopf aus dem Kontaktor 8 durch Leitung 23 in den Reboiler 24 und wird dort als Brennstoff des Reboilers verwendet. Die Rauchgase des Reboilers 24 werden über den Kamin 26 ins Freie entlassen.

Bei dieser Verfahrensführung verlassen die Regeneriereinrichtungen lediglich Wasserdampf und Rauchgase. Das in der Trennvorrichtung 5 freigesetzte »Entlösungsgas« wird zunächst in dem Zwischenbehälter 13 und dem Fallrohr 19 als Strippgas und dann im Reboiler 24 als Heizgas verwendet. Diese gesamte Gasmenge geht nicht durch die Destillationskolonne 6, so daß diese wesentlich kleiner ausgelegt werden kann als bei bekannten Verfahren und keine Gefahr eines Gasstaues mit damit verbundener Gefahr einer Gasentzündung auftritt.

Beispiel

In der in der Zeichnung dargestellten Anlage wurde Erdgas unter einem Druck von 35 bar getrocknet. Die Trocknung erfolgte mit Glycol. Zur Regenerierung der Glycolumlaufmenge wurde eine Gasmenge von 12 $m^3_n$/h bei Hu 9900 kcal/$m^3_n$ und eine Strippgasmenge von 10 $m^3_n$/h benötigt. Durch die Druckreduzierung in der Ausschleuseinrichtung entstand eine Entlösungsgasmenge von 10 $m^3_n$/h mit Hu = 12 000 kcal/$m^3_n$. Der in einer Menge von 76 kg/h entstehende Wasserdampf konnte ohne Umweltbelästigung direkt an die Atmosphäre abgegeben oder als Kondensat aufgefangen werden.

## Patentansprüche

1. Verfahren zur Regenerierung des bei der Trocknung eines technischen Gases verwendeten flüssigen Absorptionsmittels durch Destillation des Absorptionsmittels, Rückführung des von wenigstens einem Teil des Wassers befreiten Destillations-Sumpfproduktes über einen Zwischenbehälter zu der Trocknung des technischen Gases und Zuführung des von dem Absorptionsmittel abgetrennten, aus der Trocknung des technischen Gases stammenden Gases als Brennstoff zu einer Brennereinrichtung, wobei das Absorptionsmittel zwischen der Trocknung des technischen Gases und der Destillation durch Entspannung von wenigstens einem Teil des darin gelösten Gases befreit wird, dadurch gekennzeichnet, daß man das durch Entspannung aus dem Absorptionsmittel freigesetzte Gas nach vorherigem Erwärmen als Strippgas durch den Zwischenbehälter leitet, es danach vor dem Einführen in die Brennereinrichtung von wenigstens einem Teil des darin enthaltenen Wassers befreit und das abgetrennte Wasser der Destillation zuführt.

2. Verfahren nach Anspruch 1, dadurch gekennzeichnet, daß man das Strippgas vor dem Einführen in die Brennereinrichtung durch Kondensation von darin enthaltenem Wasser in einem Kühler von diesem Wasser befreit.

3. Verfahren nach Anspruch 1 und 2, dadurch gekennzeichnet, daß man das Strippgas vor dem Einführen in die Brennereinrichtung durch Kontakt mit flüssigem Absorptionsmittel von wenigstens einem Teil des im Strippgas enthaltenen Wassers befreit.

4. Verfahren nach Anspruch 3, dadurch gekennzeichnet, daß man für den Kontakt mit dem Strippgas einen Seitenstrom des von der Trocknung des technischen Gases kommenden Absorptionsmittels verwendet und diesen Seitenstrom nach dem Kontakt mit dem Strippgas der Destillation zuführt.

5. Verfahren nach Anspruch 1 bis 4, dadurch gekennzeichnet, daß man das durch Entspannung freigesetzte Gas vor der Einführung in den Zwischenbehälter durch Wärmeaustausch mit dem Sumpf der Destillationseinrichtung erwärmt.

6. Verfahren nach Anspruch 1 bis 4, dadurch gekennzeichnet, daß man das von wenigstens einem Teil des enthaltenen Wassers befreite Strippgas als Brennstoff für den Reboiler der Destillationseinrichtung verwendet.

7. Verfahren nach Anspruch 1 bis 6, dadurch gekennzeichnet, daß man das Destillations-Sumpfprodukt über einen Überlauf im Sumpf der Destillationseinrichtung im Gegenstrom zu dem Strippgas in den Zwischenbehälter ablaufen läßt und das Strippgas über ein in den Sumpf der Destillationseinrichtung eingetauchtes Tauchrohr am oberen Ende des Destillations-Sumpfproduktablaufes der Strippgastrocknung zuführt.

## Claims

1. A method of regenerating the fluid absorption agent which is used in drying a technical gas, by distillation of the absorption agent, recycling the distillation sump produkt from which at least a part of the water has been removed by way of an intermediate container to the operation of drying the technical gas, and feeding the gas which is separated from the absorption agent and which originates from the operation of drying the technical gas to a burner apparatus as fuel, wherein at least a part of the gas dissolved in the absorption agent is removed therefrom between the operation of drying the technical gas and the distillation operation by expansion, characterized in that the gas which is liberated from the absorption agent by expansion is passed as a stripping gas through the intermediate container, after first having been heated, at least a part of the water contained in said gas is then removed therefrom before it is passed into the burner apparatus, and the water which is separated off is passed to the distillation operation.

2. A method according to claim 1 characterized in that, before being introduced into the burner apparatus, the stripping gas is freed of water contained therein by condensation of the water in a cooler.

3. A method according to claim 1 and claim 2 characterized in that, before being introduced into the burner apparatus, the stripping gas is freed of at least a part of the water contained in the stripping gas, by contact with fluid absorption agent.

4. A method according to claim 3 characterized in that a side flow of the absorption agent coming from the operation of drying the technical gas is used for contact with the stripping gas and said side flow is passed to the distillation operation after contact with the stripping gas.

5. A method according to claims 1 to 4 characterized in that the gas which is liberated by expansion is heated by heat exchange with the sump of the distillation apparatus, before being introduced into the intermediate container.

6. A method according to claims 1 to 4 characterized in that the stripping gas from which at least a part of the water contained therein is removed is used a s a fuel for the re-boiler of the distillation apparatus.

7. A method according to claims 1 to 6 characterized in that the distillation sump product is discharged into the intermediate container by way of an overflow in the sump of the distillation apparatus in counter-flow to the stripping gas and the stripping gas is fed to the stripping gas drying operation by way of a dip pipe which is imemrsed in the sump of the distillation apparatus, at the upper end of the distillation sump product discharge.

## Revendications

1. Procéde de régénération de l'agent d'absorption liquide utilisé lors du séchage d'un gaz industriel par distillation de l'agent d'absorption, recyclage du produit distillé en pied de cuve libéré d'au moins une partie de son eau dans un récipient intermédiaire pour le séchage du gaz industriel et amenée du gaz provenant du séchage du gaz industriel séparé d'avec l'agent d'absorption dans une installation de combustion en tant que combustible, grâce à quoi l'agent d'absorption entre le séchage du gaz industriel et la distillation par détente est libéré d'au moins une partie du gaz qui y est dissous, caractérisé en ce qu'on conduit le gaz libéré par détente de l'agent d'absorption apres échauffement préalable comme gaz de stripping à travers ledit récipient intermédiaire, après cela, on le libère avant introduction dans l'installation de combustion d'au moins une partie de l'eau qui y est contenue, et l'on introduit l'eau séparée dans la distillation.

2. Procéde selon la revendication 1, caractérié en ce qu'avant introduction dans l'installation de combustion, on libère de son eau le gaz de stripping par condensation dans un réfrigérant de l'eau qui y était contenue.

3. Procédé selon la revendication 1 et la revendication 2, caractérisé en ce qu'avant introduction dans l'installation de combustion, on libère le gaz de stripping d'au moins une partie de l'eau qui y est contenue par contact avec l'agent d'absorption liquide.

4. Procéde selon la revendication 3, caractérisé en ce que pour réaliser le contact avec le gaz de stripping, on utilise un courant dérivé de l'agent d'absorption provenant du séchage du gaz industriel et l'on introduit ce courant dérivé après contact avec le gaz de stripping dans la distillation.

5. Procédé selon l'une des revendications 1 à 4, caractérisé en ce qu'on réchauffe le gaz libéré par détente avant introduction dans le récipient intermédiaire par échange de chaleur avec le pied de cuve de l'installation de distillation.

6. Procédé selon l'une des revendications 1 à 4, caractérisé en ce qu'on utilise le gaz de stripping libéré d'au moins une partie de l'eau qu'il contient comme combustible pour le rebouilleur de l'installation de distillation.

7. Procédé selon l'une des revendications 1 à 6, caractérisé en ce qu'on fait déborder le produit distillé en pied de cuve par dessus un trop plein en pied de cuve de l'installation de distillation en contre-courant avec le gaz de stripping dans le récipient intermédiaire et en ce qu'on introduit le gaz de stripping par dessus un tube plongeur immergé dans le pied de cuve de l'installation de distillation à l'extrémité supérieure du déchargement des produits de pied de cuve de distillation dans le séchage des gaz de stripping.

0 022 983